# EUROPÄISCHE PATENTANMELDUNG

(11) **EP 0 531 814 A2**
(43) Veröffentlichungstag der Anmeldung: **17.03.1993**
(21) Anmeldenummer: 92114630.4
(22) Anmeldetag: 27.08.1992
(51) Int. Cl.: B23Q 3/155

(54) **Werkzeuggreifer**

(30) Priorität: 09.09.1991 DE 9111159 U
(71) Anmelder: DECKEL MAHO GmbH, D-87459 Pfronten (DE)
(72) Erfinder: Geissler, Alfred, W-8962 Pfronten-Halden (DE)
(74) Vertreter: Patentanwälte Beetz - Timpe - Siegfried Schmitt-Fumian - Mayr

(57) **Zusammenfassung**

Gegenstand der Erfindung ist ein Werkzeuggreifer zum Aus- und Einwechseln eines Werkzeugs in eine Arbeitsspindel bzw. in ein Werkzeugmagazin, bestehend aus zwei zangenartigen Greifarmen (20, 21), einem an einem Werkzeugwechsler (5) angeordneten Tragkörper (1), an dem die beiden Greifarme gegeneinander verschwenkbar montiert sind, und aus einer Betätigungseinrichtung zum Öffnen und Schließen der beiden Greifarme. Zur Erzielung einer einfachen Konstruktion mit nur wenigen Einzelteilen und zur Vermeidung von technisch aufwendigen hydraulischen oder pneumatischen Antriebsmitteln ist erfindungsgemäß zwischen den zueinander etwa parallelen rückseitigen Schenkeln (28, 29) der Greifarme (20, 21) eine in Schließrichtung wirkende Feder (30) eingespannt. Ferner weist der auf einer Säule (2) motorisch verschiebbar angeordnete Tragkörper (1) in einer zur Säule (2) achsparallelen Bohrung (10) einen gegen eine Feder (12) verschiebbaren Bolzen auf, dessen seitlich angeformtes Verriegelungsglied (14) zwischen die rückwärtigen Schenkel (28, 29) der beiden doppelarmig ausgebildeten Greifarme (20, 21) eingreift.

## Beschreibung

Die Erfindung betrifft einen Werkzeuggreifer zum Aus- und Einwechseln eines Werkzeugs in eine Arbeitsspindel bzw. in ein Werkzeugmagazin, bestehend aus zwei zangenartigen Greifarmen, einem an einem Werkzeugwechsler verdrehbar angeordneten Tragkörper, an den die beiden Arme gegeneinander verschwenkbar montiert sind, und aus einer Betätigungseinrichtung zum Öffnen und Schließen der beiden Greifarme.

In programmgesteuerten Fräs- und Bohrmaschinen sowie in Bearbeitungszentren werden verschiedenartige Werkzeug-Wechselsysteme eingesetzt, um die einzelnen Werkzeuge aus der jeweiligen Arbeitsspindel herauszunehmen und sie in einem in vorgegebenem Abstand positionierten Werkzeugmagazin abzulegen und umgekehrt. Ein wesentlicher Bestandteil der verschiedenartigen Wechselsysteme sind die Werkzeuggreifer, welche eine sichere Halterung der ggfs. schwergewichtigen Werkzeuge beim Herausziehen aus der Spindel, bei der Durchführung der verschiedenartigen Transportbewegungen und auch beim Einsetzen der Spindel in die vorbestimmte Stelle im Werkzeugmagazin gewährleisten müssen. Bekannte Greifer weisen demzufolge regelmäßig motorische Antriebsmittel für die Öffnungs- und Schließbewegung der zangenartigen Greifarme auf, welche die Arme normalerweise in einer ausreichend weit geöffneten Spreizstellung halten und nach der Positionierung am Werkzeug eine ausreichend kräftige Schließbewegung erzeugen. Nachteil dieser meist als Druckmittelzylinder ausgebildeten Betätigungseinrichtungen ist ihr komplexer Aufbau und ihre Störanfälligkeit nach längerem Gebrauch, die u. U. zu einem ungewollten Öffnen der Greifarme während einer Transportbewegung führen kann. Eine derartige Störung führt regelmäßig zum Abschalten der Maschine und birgt die weitere Gefahr einer Beschädigung der kostspieligen Werkzeuge bzw. der aufgespannten Werkstücke.

Aufgabe der Erfindung ist es, einen Werkzeuggreifer mit einfacherem und funktionssicherem Aufbau ohne elektrische oder hydraulische Antriebselemente für seine Betätigung zu schaffen.

Diese Aufgabe wird erfindungsgemäß dadurch gelöst, daß zwischen den zueinander parallelen Schenkeln der Greifarme eine ausreichend steife Schließfeder eingespannt ist und daß der Tragkörper auf einer Stange motorisch verschiebbar angeordnet ist und in einer zur Stange achsparallelen Bohrung einen gegen eine Feder verschiebbaren Bolzen aufweist, dessen seitlich angeformtes Verriegelungsglied zwischen die rückwärtigen Schenkel der beiden doppelarmig ausgebildeten Greifarme eingreift.

Bei einer besonders einfachen Ausführung des erfindungsgemäßen Werkzeuggreifers steht der Bolzen unter der Einwirkung der Feder einseitig über eine Stirnseite des Tragkörpers vor und gelangt bei einer axialen Vorschubbewegung des Tragkörpers mit diesem vorstehenden Ende in Anschlag mit einem maschinenfesten Bauteil. Zweckmäßig kann dieser maschinenfeste Bauteil eine Stellschraube enthalten, die als Anschlag für den Bolzen dient und das Verriegelungsglied am Ende der Vorschubbewegung des Tragkörpers zwischen die beiden Schenkel der Greifarme einschiebt. Auf diese Weise erfolgt eine sichere Verriegelung der beiden Greifarme in ihrer Schließstellung.

Gemäß einer weiteren zweckmäßigen Ausgestaltung der Erfindung weist das am Bolzen seitlich befestigte bzw. angeformte scheibenförmige Verriegelungsglied seitliche Schrägflächen auf, die mit schrägen Seitenflächen an den rückwärtigen Enden der Greifarme korrespondieren. Durch flächige Anlage dieser Schrägflächen-Paare erfolgt so eine sichere Fixierung der beiden rückwärtigen Armschenkel und damit eine Arretierung der beiden Greifarme in der jeweiligen Schließstellung.

Im folgenden wird ein Ausführungsbeispiel der Erfindung anhand der Zeichnung im einzelnen beschrieben. Es zeigen:
- Fig. 1: einen Werkzeuggreifer in Draufsicht,
- Fig. 2: den Werkzeuggreifer nach Fig. 1 beim Eingriff in die Ringnut eines eingespannten Werkzeugkegels im Axialschnitt,
- Fig. 3: den Bolzen mit Verriegelungsglied in ausgerücktem Zustand,
- Fig. 4: den Bolzen mit Verriegelungsglied im Arretierzustand.

Der dargestellte Werkzeuggreifer enthält einen Tragkörper 1, der auf einer Stange bzw. Säule 2 axial verschiebbar geführt ist. Diese Säule 2 ist über zwei Endzapfen zwischen den Schenkeln 3, 4 eines Bauteils 5 befestigt, welches ein Konstruktionselement des Werkzeugwechslers bildet und um eine - nicht dargestellte - Achse verdrehbar ausgeführt sein kann. In diesem Bauteil 5 ist achsparallel zur Säule 2 ein Zylinder 6 gelagert, in dessen axialer Blindbohrung 7 ein Führungsbolzen 8 hineinragt. Der Führungsbolzen 8 ist mit seinem verbreiterten Kopf in einem unteren Tragstück des Bauteils 4 festgelegt. Seitlich am Zylinder 6 ist ein Mitnehmerzapfen 9 befestigt, der in eine radiale Blindausnehmung im hohlzylindrischen Tragkörper 1 hineinragt. Durch eine Axialbewegung des Zylinders 6 gegenüber dem Bauteil 5 wird der Tragkörper 1 über den Mitnehmerzapfen 9 auf der Säule 2 axial verschoben.

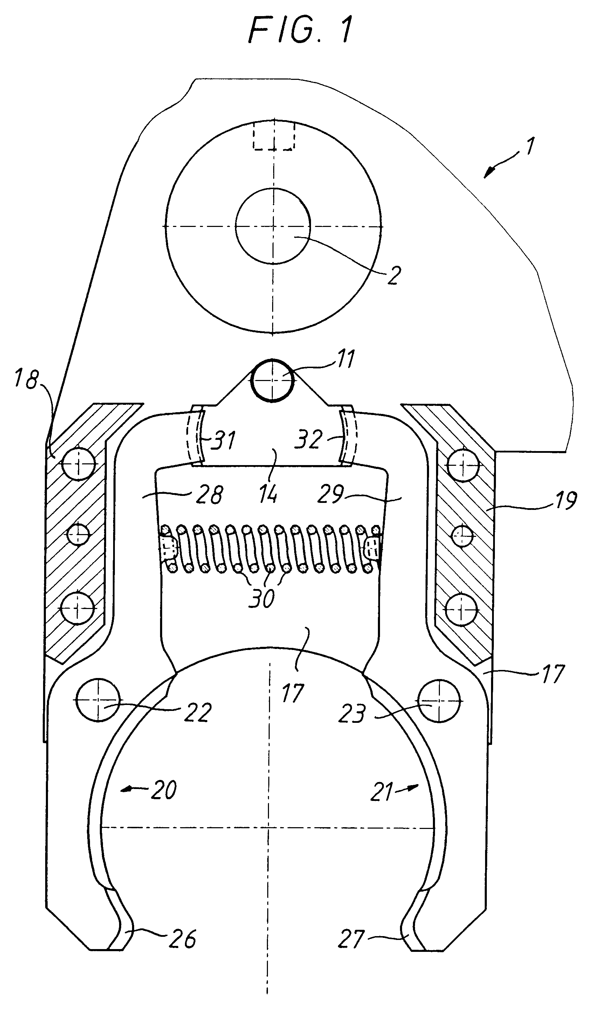

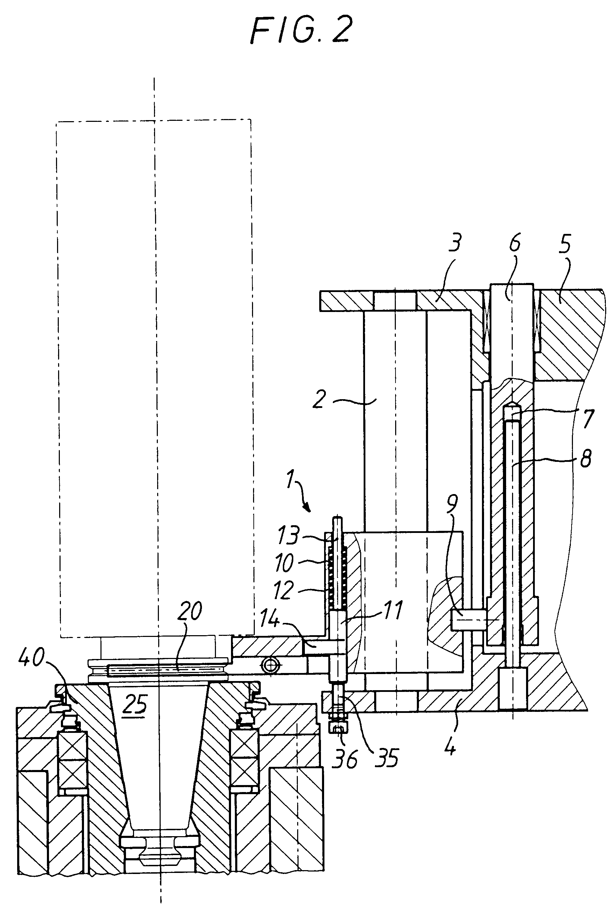

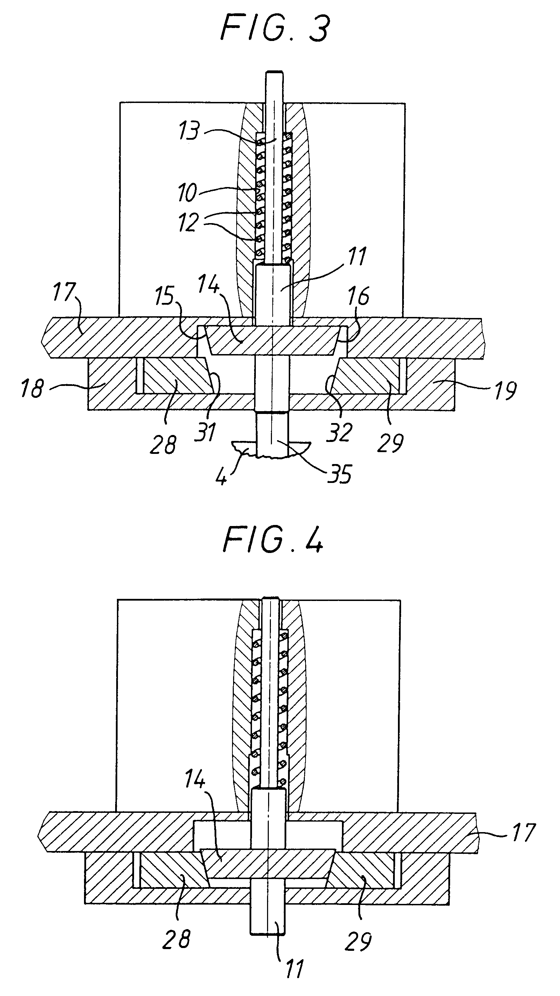

Wie aus Fig. 2 ersichtlich ist im Tragkörper 1 diametrial gegenüberliegend zum Mitnehmerzapfen 9 eine zur Säule bzw. Stange 2 achsparallele abgesetzte Bohrung 10 ausgebildet, in welcher ein Bolzen 11 axial verschiebbar aufgenommen ist. Zwischen einer oberen Ringschulter der Bohrung und einer Anschlagfläche am Bolzen 11 ist eine Druckfeder 12 eingespannt, die den oberen schmalen Bolzenabschnitt 13 umgibt. Unter der Kraft dieser Druckfeder wird der Bolzen 11 in der in Fig. 4 dargestellten Verriegelungsposition gehalten. Etwa mittig im verdickten Abschnitt des Bolzens 1 ist ein Verriegelungsglied 14 ausgebildet, das die in Fig. 1 dargestellte Form besitzt und seitliche Schrägflächen 15, 16 gemäß Fig. 3, 4 aufweist. Am Tragkörper 1 ist ferner eine seitlich vorstehende Aufnahmeplatte 17 angeformt, auf der zwei seitliche Begrenzungsstege 18, 19 einer unteren Platte befestigt sind. Ferner ist in dieser Aufnahmeplatte 17 eine Ausnehmung vorgesehen, welche in etwa die Form des Verriegelungsstückes 14 hat und die bei eingeschobenem Bolzen 11 zur Aufnahme des Verriegelungsgliedes 14 dient (vgl. Fig. 3). In der Aufnahmeplatte 17 sind zwei doppelarmige Greifarme 20, 21 um Gelenkbolzen 22, 23 verschwenkbar gelagert, deren Vorderschenkel eine kreissegmentförmige Innenkontur für den Eingriff in die Aufnahmenut eines in Fig. 2 dargestellten Werkzeugkegels 25 aufweist. An den vorderen Schenkelenden sind Spreiznasen 26, 27 mit bogenförmigen Innenflächen ausgebildet. Die rückwärtigen Schenkel 28, 29 der beiden Greifarme 20, 21 verlaufen parallel zueinander und auch parallel zu einer fiktiven Verbindungslinie zwischen der Mittelachse eines zu ergreifenden Werkzeugs 25 und den Mittelachsen des Bolzens 11 sowie der Säule 2. Etwa im mittleren Abschnitt dieser rückwärtigen Schenkel 28, 29 sind an deren Innenwandungen zwei Zapfen ausgebildet, die als Halterungen für eine steife Druckfeder 30 dienen. Die Endabschnitte der beiden rückwärtigen Schenkel 28, 29 sind nach innen um etwa 90° umgebogen und weisen an ihren Enden schräge Seitenflächen 31, 32 auf, die mit den Schrägflächen 15, 16 des Verriegelungsgliedes 14 korrespondieren (vgl. Fig. 3, 4).

In dem unteren Schenkel 4 des Bauteils 5 ist in der Mittelachse des Bolzens 11 eine vorstehende Stellschraube 35 angeordnet, die mittels eines Kopfes 36 in einer Gewindebohrung im Schenkel 4 mehr oder weniger tief eingeschraubt werden kann, so daß ihr vorstehender Schaft einen einstellbaren Anschlag für das untere verdickte Bolzenende bildet.

Der vorstehend beschriebene Werkzeuggreifer funktioniert wie folgt:
Zum Ergreifen eines z.B. in der Arbeitsspindel oder in der Wechselstellung eines Magazins befindlichen Werkzeugkegels wird der Werkzeugwechsler (Bauteil 5) seitlich an den aufzunehmenden Werkzeugkegel 25 herangefahren. Während oder kurz vor dieser seitlichen Bewegung erfolgt eine Verschiebung des Tragkörpers 1 aus einer oberen - nicht dargestellten - Position in die Stellung nach Fig. 2. Während dieser Verschiebebewegung gelangt der Bolzen 11 in Anlage an den vorstehenden Teil der Stellschraube 35, so daß der Bolzen 11 um einen vorgegebenen Betrag aus seiner unteren Normalstellung gemäß Fig. 4 in seine obere Entriegelungsstellung gemäß Fig. 3 verschoben wird. Damit gelangt das Verriegelungselement 14 von den rückwärtigen Enden der Zangenschenkel 28, 29 außer Eingriff. Durch eine seitliche Einschiebebewegung des Werkzeugwechslers gelangen die bogenförmig ausgebildeten Spreiznasen 26, 27 in Eingriff in die am Werkzeugkegel 25 ausgebildete Aufnahmenut, wobei aufgrund der Bogenform dieser Nasen eine Spreizung der beiden Vorderschenkel der Zangen gegen die Kraft der steifen Feder 30 erfolgt. Diese seitliche Bewegung wird so lange fortgesetzt, bis die beiden Vorderschenkel der beiden Greifarme 20, 21 den Werkzeugkegel sicher umgriffen haben (Stellung gemäß Fig. 2). Durch eine erneute Axialverschiebung des Tragkörpers 1 mittels des Zylinders 6 und seines Mitnehmers 9 wird der Werkzeugkegel aus der Arbeitsspindel 40 der Werkzeugmaschine bzw. aus der Werkstückhalterung eines Magazins axial in Richtung des Pfeiles 41 herausgezogen. Zu Beginn dieser Abziehbewegung verschiebt sich der Bolzen relativ zum Tragkörper 1 aus der Stellung nach Fig. 3 in die Verriegelungsstellung nach Fig. 4, wobei das Verriegelungselement zwischen die schrägen Seitenflächen 31, 32 der rückwärtigen Schenkel 28, 29 der Greifarme eintritt und durch Anlage der jeweiligen Keilflächen eine Schwenkbewegung der beiden Greifarme 20, 21 sicher verhindert. Diese relative Axialverschiebung des Bolzens 11 erfolgt unter der Wirkung der Feder 12. Zum Einwechseln eines Werkzeugs mit Werkzeugkegel 25 in die Arbeitsspindel bzw. in eine Werkzeughalterung im Magazin vollziehen sich die verschiedenen Bewegungsvorgänge in umgekehrter Reihenfolge.

Bei dem erfindungsgemäßen Werkzeuggreifer ist es wesentlich, daß zu Beginn jeder axialen Verschiebebewegung des Tragkörpers eine wirksame Verriegelung der beiden Greifarme durch einen Eingriff des Verriegelungselementes 14 zwischen die rückwärtigen Enden der beiden Greifarme erfolgt. Diese sichere Verriegelung ist konstruktiv außerordentlich einfach und funktionssicher, da sie nur durch einen verstellbaren Anschlag 35 am Wechsler sowie den Bolzen 11 mit seinem Verriegelungsglied 14 und eine einfache Druckfeder bewirkt wird. Zusätzliche Steuerelemente zur Betätigung der beiden Greifarme 20, 21 sind nicht erforderlich.

Die Erfindung ist nicht auf die dargestellte Ausführung beschränkt. Insbesondere können jeweils zwei Werkzeuggreifer diametral gegenüberliegend oder auch um 90° gegeneinander versetzt an dem Bauteil 5 montiert sein, um die Wechselzeiten durch eine Verdrehung um eine nicht dargestelle Achse zu verkürzen.

## Patentansprüche

1. Werkzeuggreifer zum Aus- und Einwechseln eines Werkzeugs in eine Arbeitsspindel bzw. in ein Werkzeugmagazin, bestehend aus zwei zangenartigen Greifarmen (20, 21), einem an einem Werkzeugwechsler (5) angeordneten Tragkörper (1), an dem die beiden Greifarme gegeneinander verschwenkbar montiert sind, und aus einer Betätigungseinrichtung zum Öffnen und Schließen der beiden Greifarme,
**dadurch gekennzeichnet,**
daß zwischen den zueinander etwa parallelen rückseitigen Schenkeln (28, 29) der Greifarme (20, 21) eine in Schließrichtung wirkende Feder (30) eingespannt ist
und
daß der Tragkörper (1) auf einer Säule (2) motorisch verschiebbar angeordnet ist und in einer zur Säule (2) achsparallelen Bohrung (10) einen gegen eine Feder (12) verschiebbaren Bolzen aufweist, dessen seitlich angeformtes Verriegelungsglied (14) zwischen die rückwärtigen Schenkel (28, 29) der beiden doppelarmig ausgebildeten Greifarme (20, 21) eingreift.

2. Werkzeuggreifer nach Anspruch 1,
dadurch gekennzeichnet,
daß der Bolzen (11) unter der Einwirkung der Feder (12) einseitig über eine Stirnseite des Tragkörpers vorsteht und bei einer Axialverschiebung des Tragkörpers (1) durch Anlage an einen Anschlag (35) gegen die Kraft der Feder (12) verschiebbar ist.

3. Werkzeuggreifer nach Anspruch 1 oder 2,
dadurch gekennzeichnet,
daß als Anschlag für den Bolzen (11) eine in einem Bauteil (4, 5) des Werkzeugwechslers angeordnete Stellschraube (35, 36) vorgesehen ist.

4. Werkzeuggreifer nach einem der Ansprüche 1 bis 3,
dadurch gekennzeichnet,
daß das am Bolzen (11) seitlich befestigte Verriegelungsglied (14) seitliche Schrägflächen (15, 16) aufweist, die mit schrägen Seitenflächen (31, 32) an den rückwärtigen Enden der hinteren Schenkel (28, 29) der beiden Greifarme korrespondieren.

5. Werkzeuggreifer nach einem der Ansprüche 1 bis 4,
dadurch gekennzeichnet,
daß die vorderen Schenkel der beiden Greifarme an ihren Enden bogenförmige Spreiznasen (26, 27) aufweisen.
